# EUROPÄISCHE PATENTANMELDUNG

(11) **EP 2 428 108 A1**
(43) Veröffentlichungstag der Anmeldung: **14.03.2012**
(21) Anmeldenummer: 11007258.4
(22) Anmeldetag: 07.09.2011
(51) Int. Cl.: A01D 34/68, G05G 5/00, G05G 5/08

(54) **Handgeführtes Arbeitsgerät**

(30) Priorität: 14.09.2010 DE 102010045333
(71) Anmelder: Andreas Stihl AG & Co. KG, 71336 Waiblingen (DE)
(72) Erfinder: Tost, Christopher, 74343 Sachsenheim (DE); Elfner, Jörg, 71336 Waiblingen (DE)
(74) Vertreter: Reinhardt, Annette

(57) **Zusammenfassung**

Ein handgeführtes Arbeitsgerät, insbesondere ein Rasenmäher oder dgl. besitzt einen Antriebsmotor (2), der ein Werkzeug des Arbeitsgeräts antreibt. Das Arbeitsgerät besitzt einen Griff (4), an dem mindestens ein Bedienelement (7) schwenkbar angeordnet ist. Das Bedienelement (7) besitzt eine unbetätigte und eine betätigte Stellung. Außerdem ist eine Bremseinrichtung für das Werkzeug vorgesehen, die in betätigter Stellung einen weiteren Antrieb des Werkzeugs verhindert. Eine einfache Bedienung der Bremseinrichtung ergibt sich, wenn das Bedienelement (7) über eine Spannfeder (20) auf die Bremseinrichtung wirkt und die Spannfeder (20) beim Verschwenken des Bedienelements (7) von der unbetätigten in die betätigte Stellung gespannt wird. Das Arbeitsgerät besitzt außerdem eine Auslöseeinrichtung (41), die die Wirkverbindung zwischen der Spannfeder (20) und der Bremseinrichtung in unbetätigtem Zustand der Auslöseeinrichtung (41) sperrt und in betätigtem Zustand freigibt.

## Beschreibung

Die Erfindung betrifft ein handgeführtes Arbeitsgerät, insbesondere einen Rasenmäher oder dgl., der im Oberbegriff des Anspruchs 1 angegebenen Gattung.

Aus der DE 42 28 103 C1 ist ein Rasenmäher bekannt, an dessen Griffbügel eine Schalteinrichtung angeordnet ist. Um die Schalteinrichtung in Betrieb zu nehmen, muss der Betätigungsknopf gedrückt und dann der Bedienbügel verschwenkt werden. Der Betätigungsknopf muss dabei gedrückt gehalten werden, bis der Bedienbügel verschwenkt ist.

Der Erfindung liegt die Aufgabe zugrunde, ein handgeführtes Arbeitsgerät der gattungsgemäßen Art zu schaffen, dessen Bedienung vereinfacht ist.

Diese Aufgabe wird durch ein handgeführtes Arbeitsgerät mit den Merkmalen des Anspruchs 1 gelöst.

Dadurch, dass das Bedienelement nicht direkt auf die Bremseinrichtung wirkt, sondern zunächst eine Feder vorspannt, deren Energie dann durch Betätigen der Auslöseeinrichtung freigegeben wird, ist eine umgekehrte Bedienreihenfolge möglich. Der Bediener kann zuerst das Bedienelement betätigen und anschließend die Auslöseeinrichtung. Für die Betätigung der Auslöseeinrichtung wird nur wenig Kraft benötigt, da die Betätigungskraft für die Bremseinrichtung in der Spannfeder vorgespannt ist. Dadurch, dass die Betätigungskraft über das Bedienelement eingebracht wird, das üblicherweise einen großen Verschwenkwinkel und einen großen Hebelarm besitzt, sind die Bedienkräfte klein, so dass sich eine komfortable Bedienung ergibt.

Um sicherzustellen, dass die Auslöseeinrichtung nicht unbeabsichtigt betätigt ist, ist vorgesehen, dass die Auslöseeinrichtung eine Bedieneinrichtung besitzt, die in Richtung auf die unbetätigte Stellung gefedert ist. Vorteilhaft wirkt die Spannfeder über ein Betätigungselement auf die Bremseinrichtung.

Im Betrieb muss die Bremseinrichtung vom Bediener über das Bedienelement in der unbetätigten Stellung gehalten werden, so dass das Werkzeug angetrieben wird. Vorteilhaft ist die Spannfeder an einem Schwenklager an der Betätigungseinrichtung gehalten, und das Bedienelement ist um eine Schwenkachse schwenkbar gelagert. Die Verbindungslinie von Schwenklager und Schwenkachse schließt mit der Längsmittelachse der Spannfeder in betätigter Stellung des Bedienelements vorteilhaft einen Winkel von weniger als etwa 20°, insbesondere einen Winkel von weniger als etwa 10° ein. Aufgrund des geringen Winkels befindet sich die Spannfeder in betätigter Stellung des Bedienelements annähernd in Totpunktlage. Dadurch werden nur sehr geringe Kräfte zum Halten des Bedienelements benötigt.

Ein einfacher Aufbau ergibt sich, wenn die Auslöseeinrichtung eine Sperrklinke umfasst. Die Sperrklinke ist dabei insbesondere an dem Betätigungselement schwenkbar gelagert. Vorteilhaft hält die Sperrklinke in gelöstem Zustand der Bremseinrichtung die Auslöseeinrichtung in ihrer betätigten Stellung. Dadurch muss die Auslöseeinrichtung vom Bediener im Betrieb nicht gehalten werden. Vorteilhaft ist die Sperrklinke in einem Gehäuse angeordnet, wobei die Sperrklinke bei unbetätigter Auslöseeinrichtung an dem Gehäuse eingerastet ist. Durch die Verrastung der Sperrklinke an dem Gehäuse ergibt sich ein einfacher Aufbau und eine sichere Fixierung bei unbetätigter Auslöseeinrichtung. Vorteilhaft wird die Sperrklinke von der Spannfeder gegen einen Absatz des Gehäuses gezogen, wobei die Sperrklinke und der Absatz so ausgebildet sind, dass die Sperrklinke bei einer Bewegung in Richtung auf die Spannfeder in ihre gelöste Stellung verschwenkt wird. Dadurch wird eine zwangsweise Entriegelung bei freigegebener Sperrklinke sichergestellt. Um ein Verschwenken der Sperrklinke bei unbetätigter Auslöseeinrichtung zu verhindern, ist vorgesehen, dass die Auslöseeinrichtung einen Schieber umfasst, der in unbetätigtem Zustand ein Verschwenken der Sperrklinke in ihre gelöste Stellung verhindert. Dadurch wird ein Lösen der Verrastung der Sperrklinke und damit eine Bewegung der Sperrklinke in Richtung auf die Spannfeder verhindert. Ein einfacher Aufbau ergibt sich, wenn der Schieber über einen Druckstab auf die Sperrklinke wirkt. Vorteilhaft besitzt der Schieber eine Aussparung, in die der Druckstab in betätigter Stellung der Auslöseeinrichtung ragt. Über die Aussparung kann der Druckstab den Schieber in betätigter Stellung der Auslöseeinrichtung halten, so dass die Auslöseeinrichtung nicht vom Bediener gehalten werden muss.

Vorteilhaft besitzt die Bremseinrichtung eine Rückstellfeder, die die Bremseinrichtung in die betätigte Stellung zieht. Die Spannfeder zieht die Bremseinrichtung vorteilhaft gegen der Kraft der Rückstellfeder in die unbetätigte Stellung. Die Bremseinrichtung kann insbesondere eine Messerbremse, eine Kupplung oder eine Kombination aus Messerbremse und Kupplung sein. Sowohl durch Bremsen als auch durch Auskuppeln kann ein weiterer Antrieb des Werkzeugs verhindert werden.

Vorteilhaft besitzt das Arbeitsgerät einen Fahrantrieb und einen verschwenkbaren Bedienhebel zur Einstellung der Fahrgeschwindigkeit. Die Bedieneinrichtung für die Auslöseeinrichtung ist vorteilhaft an dem Bedienhebel für die Fahrgeschwindigkeit angeordnet. Dadurch wird nur ein Bedienhebel benötigt. Zweckmäßig ist eine Rasteinrichtung vorgesehen, die mehrere Stellungen für den Bedienhebel festlegt.

Vorteilhaft verläuft die Schwenkachse des Bedienhebels in mindestens einer Stellung, insbesondere bei gespannter Spannfeder und in unbetätigtem Zustand der Auslöseeinrichtung, etwa durch den Berührpunkt von zwei quer zueinander bewegten Bauteilen der Auslöseeinrichtung. Die beiden quer zueinander bewegten Bauteile der Auslöseeinrichtung sind dabei insbesondere der Druckstab und die Sperrklinke. Der Verschleiß zwischen den beiden Bauteilen wird minimiert, da die Relativbewegung bei der höchsten auftretenden Belastung minimal ist. Die beiden relativ zueinander bewegten Bauteile können aufgrund dieser Anordnung einfach geometrisch abgestimmt werden. Aufgrund der sich ergebenden kurzen Toleranzketten können die Funktionen sichergestellt werden. Es kann jedoch auch vorteilhaft sein, dass die angegebene Lage der Schwenkachse in einer anderen Stellung, also beispielsweise bei ungespannter Spannfeder und/oder in betätigtem Zustand der Auslöseeinrichtung, gegeben ist.

Vorteilhaft ist das Arbeitsgerät ein über den Boden zu führendes Arbeitsgerät. Hierzu ist vorteilhaft vorgesehen, dass das Arbeitsgerät mindestens ein Rad besitzt, das im Betrieb auf dem Boden abrollt.

Ein Ausführungsbeispiel der Erfindung wird im Folgenden anhand der Zeichnung erläutert. Es zeigen:
- Fig. 1: eine perspektivische Darstellung eines Arbeitsgeräts,
- Fig. 2: eine perspektivische Darstellung des Griff des Arbeitsgeräts aus Fig. 1,
- Fig. 3: eine Seitenansicht in Richtung des Pfeils III in Fig. 2,
- Fig. 4 bis 7: schematische Darstellungen der Auslöseeinrichtung und der Spannfeder in unterschiedlichen Stellungen,
- Fig. 8 und 9: perspektivische Schnittdarstellungen der Auslöseeinrichtung,
- Fig. 10: einen Schnitt durch das Griffgehäuse im Bereich des Schwenklagers des Bedienhebels,
- Fig. 11: eine ausschnittsweise vergrößerte Schnittdarstellung des Schwenklagers aus Fig. 10.

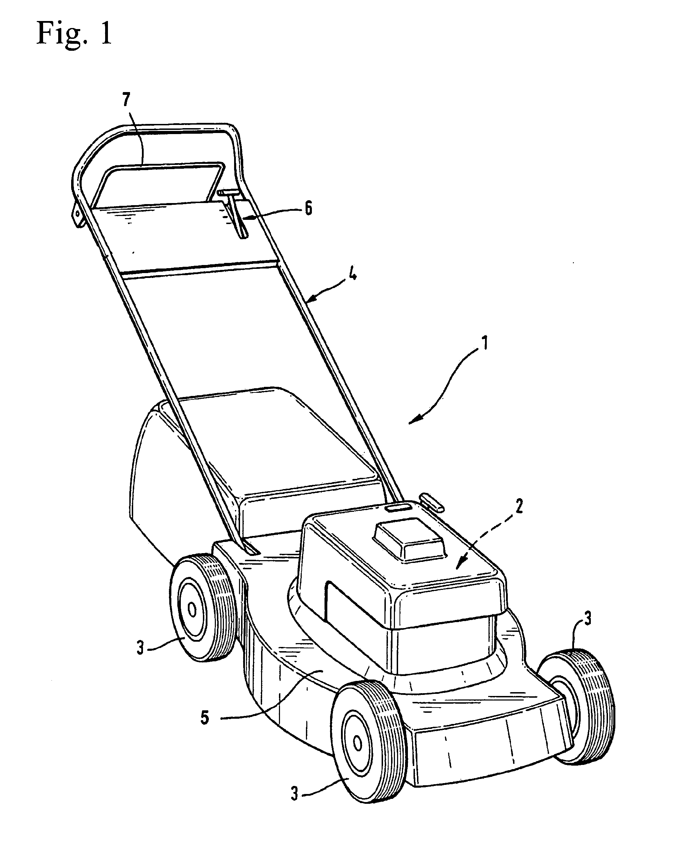

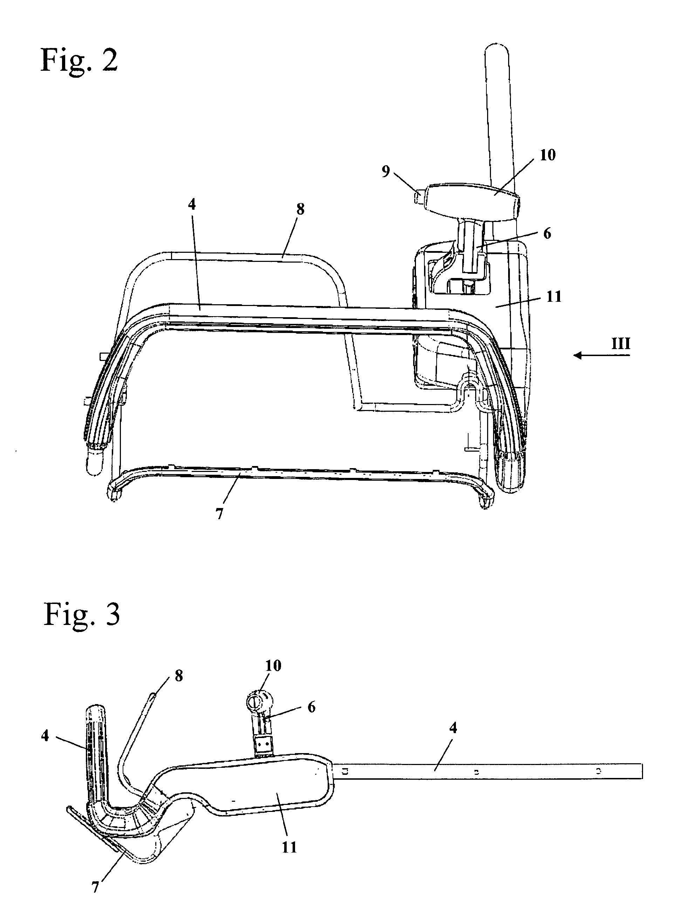

Fig. 1 zeigt als Ausführungsbeispiel für ein handgeführtes Arbeitsgerät schematisch einen Rasenmäher 1. Der Rasenmäher 1 besitzt einen an einem Gehäuse 5 angeordneten Antriebsmotor 2. Zum Führen über den Boden besitzt der Rasenmäher 1 vier Räder 3, die von dem Antriebsmotor 2 angetrieben werden. Zum Führen des Rasenmähers 1 ist im hinteren Bereich des Gehäuses 5 ein Griff 4 festgelegt, der als etwa U-förmiger Griffbügel ausgebildet ist. Am Griff 4 sind ein Bedienelement 7, das als Bedienbügel ausgebildet ist, sowie ein Bedienhebel 6 schwenkbar gelagert. Wie Fig. 2 und Fig. 3 zeigen, besitzt der Rasenmäher 1 außerdem noch einen Fahrantriebsbügel 8, der zur Zuschaltung des Fahrantriebs dient.

Wie die Fig. 2 und 3 auch zeigen, ist der Bedienhebel 6 an einem Hebelgehäuse 11 gelagert, das am Griff 4 festgelegt ist. Der Bedienhebel 6 besitzt ein Griffteil 10, aus dem seitlich ein Bedienknopf 9 ragt.

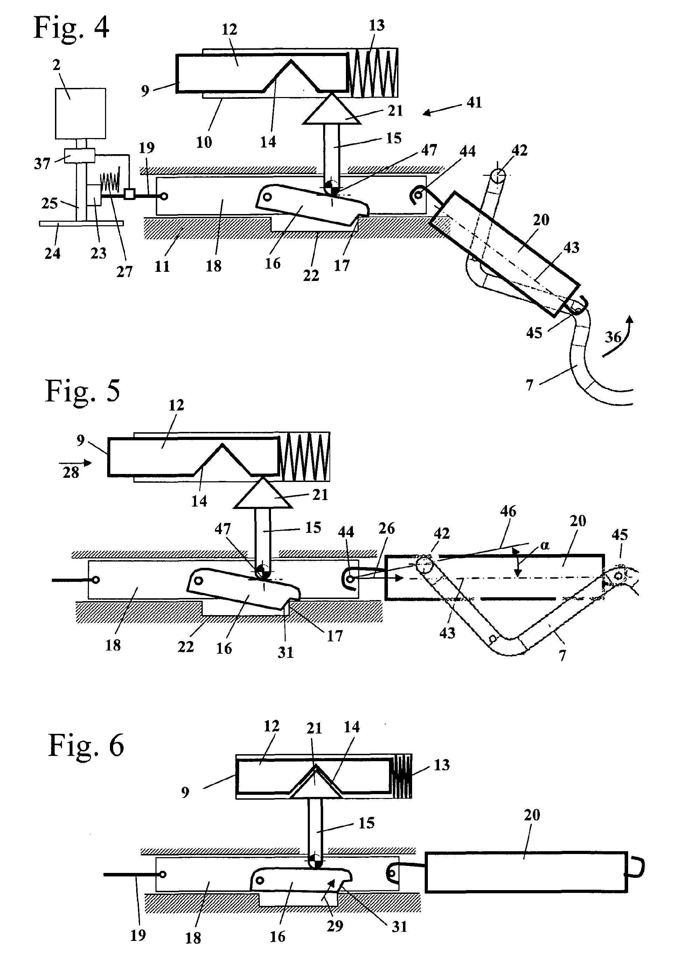

Über das Bedienelement 7 ist eine Bremseinrichtung für ein in Fig. 4 schematisch gezeigtes Messer 24 des Rasenmähers 1 betätigbar. Die Bremseinrichtung kann, wie in Fig. 4 gezeigt, eine Messerbremse 23 und eine Kupplung 37 umfassen. Alternativ können auch nur eine Messerbremse 23 oder nur eine Kupplung 37 vorgesehen sein. Die Kupplung 37 trennt die Antriebswelle 25 des Messers 24 vom Antriebsmotor 2. Die Messerbremse 23 bremst die Antriebswelle 25.

Das Bedienelement 7 wirkt über eine Spannfeder 20, ein Betätigungselement 18 und einen Bowdenzug 19 auf die Bremseinrichtung. Wie Fig. 4 schematisch zeigt, ist die Bremseinrichtung über eine Rückstellfeder 27 in Richtung auf ihre betätigte Stellung, also die gebremste bzw. ausgekuppelte Stellung, in der das Messer 24 nicht angetrieben ist, federbelastet. Die Spannfeder 20 ist am Bedienelement 7 an einem Befestigungspunkt 45 eingehängt, der zur Schwenkachse 42 des Bedienelements 7 einen Abstand besitzt. Die Spannfeder 20, die als Schraubenzugfeder ausgebildet ist, besitzt eine Längsmittelachse 43. Mit ihrem zweiten Ende ist die Spannfeder 20 an einem Schwenklager 44 am Betätigungselement 18 gelagert.

Wie Fig. 4 zeigt, besitzt der Rasenmäher 1 eine Auslöseeinrichtung 41, die das Betätigungselement 18 sperrt und ein Lösen der Bremseinrichtung verhindert. Die Auslöseeinrichtung 41 besitzt eine Sperrklinke 16, die schwenkbar am Betätigungselement 18 gelagert ist. Die Sperrklinke 16 ragt in der in Fig. 4 gezeigten verrasteten Stellung in eine Vertiefung 22 am Hebelgehäuse 11 und liegt an einem Absatz 17 der Vertiefung 22 an. Auf der der Vertiefung 22 gegenüberliegenden Seite wirkt ein Druckstab 15 auf die Sperrklinke 16 und verhindert, dass die Sperrklinke 16 nach oben aus der Vertiefung 22 ausschwenken kann. Der Druckstab 15 besitzt ein Endstück 21, das im Ausführungsbeispiel konisch ausgebildet ist und das an einem im Griffteil 10 angeordneten Schieber 12 anliegt. Da der Druckstab 15 nur in seiner Längsrichtung beweglich ist, kann die Sperrklinke 16 nicht nach oben ausweichen. Der Schieber 12 ist in Richtung auf die in Fig. 4 gezeigte unbetätigte Stellung von einer Rückstellfeder 13 federbelastet. Der Schieber 12 besitzt an seiner dem Druckstab 15 zugewandten Seite eine Aussparung 14, deren Form der des Endstücks 21 entspricht und die in unbetätigter Stellung seitlich versetzt zum Endstück 21 des Druckstabs 15 angeordnet ist.

Um das Messer 24 in Betrieb zu nehmen, muss der Bediener zunächst das Bedienelement 7 in Richtung des Pfeils 36 nach oben verschwenken. Diese Stellung ist in Fig. 5 gezeigt. Die Spannfeder 20 ist in dieser Position gespannt, da der Abstand des Schwenklagers 44 zum Befestigungspunkt 45 vergrößert ist. In der nach oben geklappten Stellung des Bedienelements 7 liegt das Bedienelement 7 vorteilhaft direkt benachbart zum Griff 4, so dass der Bediener Griff 4 und Bedienelement 7 mit einer Hand greifen kann. Wie Fig. 5 zeigt, ist in dieser Stellung die Schwenkachse 42 des Bedienelements 7 im Bereich der Spannfeder 20 angeordnet. Das Schwenklager 44 und die Schwenkachse 42 definieren eine gedachte Ebene 46, die mit der Längsmittelsachse 43 der Spannfeder 20 einen Winkel α einschließt, der vorteilhaft weniger als 20° und insbesondere weniger als 10° beträgt. Dadurch ist die Spannfeder 20 nahe ihrer Totpunktlage angeordnet und die zum Halten des Bedienelements 7 in dieser Stellung benötigte Kraft ist gering.

Die Spannfeder 20 übt auf das Betätigungselement 18 eine Zugkraft in Richtung des Pfeils 26 aus. Die Sperrklinke 16 ist in der Vertiefung 22 am Absatz 17 verrastet, so dass das Betätigungselement 18 sich nicht zur Spannfeder 20 bewegen kann. Wie Fig. 5 zeigt, ist die Sperrklinke 16 an der dem Absatz 17 zugewandten Seite mit einer Abschrägung 31 versehen. Wird der Bedienknopf 9 in Richtung des Pfeils 28 betätigt, so gelangt das Endstück 21 in den Bereich der Aussparung 14. Aufgrund der Kraft der Spannfeder 20 in Richtung des Pfeils 26 wird die Abschrägung 31 gegen den Absatz 17 gedrückt, und die Sperrklinke 16 wird in Richtung des Pfeils 29 in Fig. 6 aus der Vertiefung 22 verschwenkt. Dabei wird der Druckstab 15 von der Sperrklinke 16 zum Schieber 12 gedrückt und das Endstück 21 in die Vertiefung 14 gedrückt. Die Bremseinrichtung wird entgegen der Kraft der Rückstellfeder 27 von der Spannfeder 20 in die gelöste Stellung gezogen. Dabei wird die Sperrklinke quer zum Druckstab 15, im Ausführungsbeispiel senkrecht hierzu, bewegt.

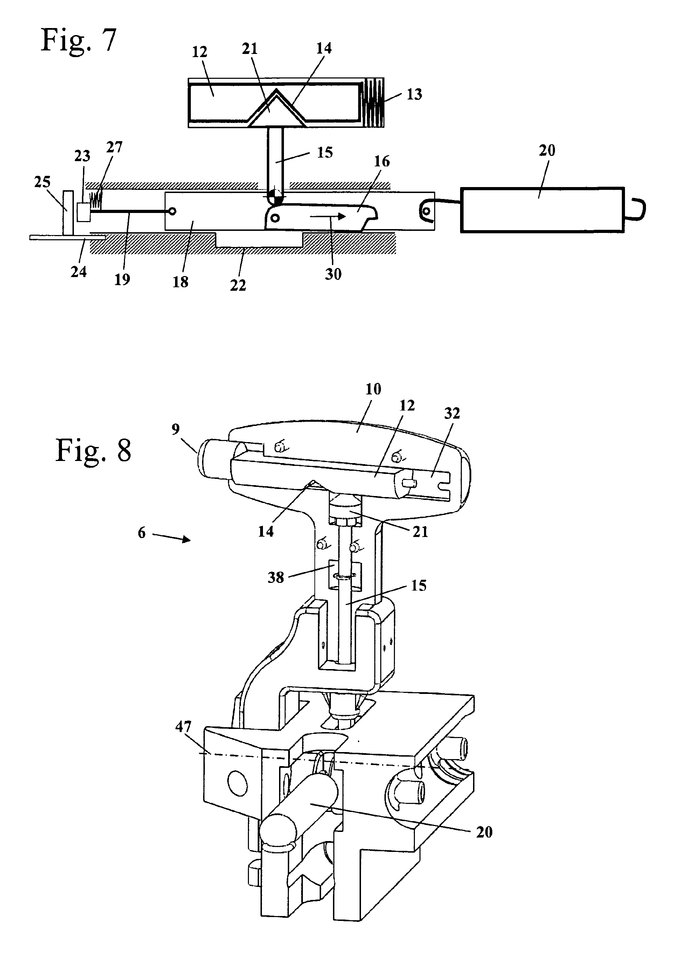

Fig. 7 zeigt die Bremseinrichtung in der gelösten Stellung. Das Betätigungselement 18 wurde von der Spannfeder 20 in Richtung des Pfeils 30 zur Spannfeder 20 gezogen. Die Spannfeder 20 ist teilweise entspannt und die Bremseinrichtung gelöst. In gelöstem Zustand der Bremseinrichtung ist die Sperrklinke 16 nach oben verschwenkt. In diesem Zustand drückt die Sperrklinke 16 das Endstück 21 des Druckstabs 15 in die Aussparung 14 und fixiert so den Schieber 12 in der betätigten Stellung.

Zum Betätigen der Bremseinrichtung muss der Bediener das Bedienelement 7 nach unten verschwenken, beispielsweise durch Loslassen. Dadurch wird die Spannfeder 20 weiter entspannt, so dass die von der Spannfeder 20 ausgeübte Kraft kleiner als die von der Rückstellfeder 27 ausgeübte Kraft ist. Über die Rückstellfeder 27 wird das Betätigungselement 18 von der Spannfeder 20 weggezogen. Sobald die Sperrklinke 16 in den Bereich der Vertiefung 22 kommt, rastet sie an der Vertiefung 22 ein. Der Druckstab 15 fällt nach unten. Diese Bewegung nach unten kann von einer Feder unterstützt sein, die in der in Fig. 8 gezeigten Aufnahme 38 am Druckstab 15 angeordnet sein kann. Das Endstück 21, das den Schieber 12 in betätigter Stellung gehalten hat, bewegt sich damit aus dem Bereich der Aussparung 14, so dass der Schieber 12 nicht mehr in seiner betätigten Stellung gehalten ist, sondern aufgrund der Rückstellfeder 13 in seine unbetätigte Stellung zurückgestellt wird.

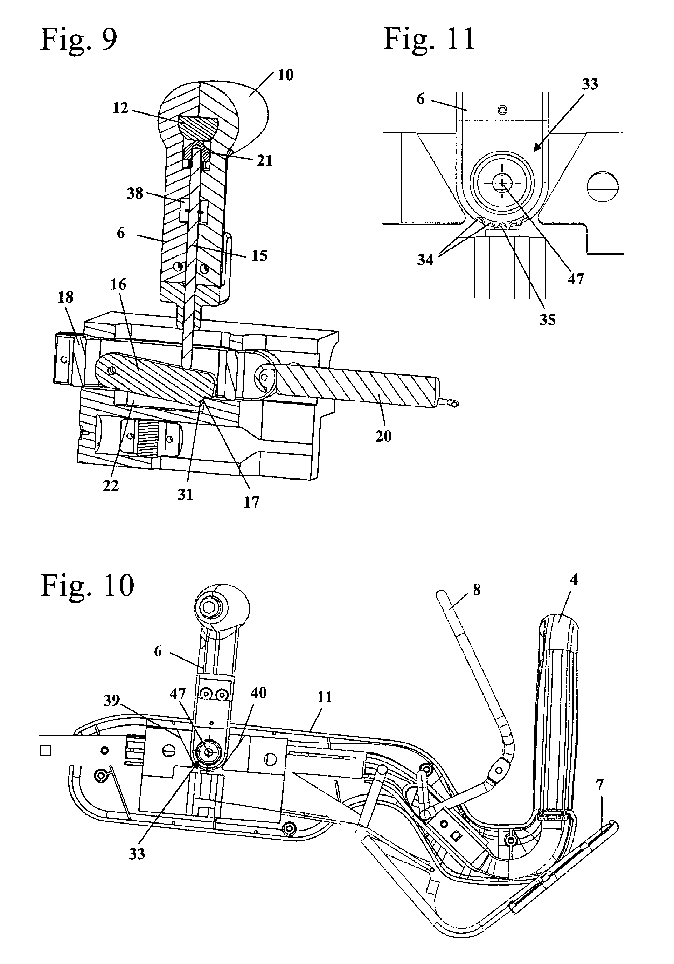

Die Fig. 8 und 9 zeigen eine konstruktive Gestaltung der Auslöseeinrichtung 41. Gleiche Bezugszeichen bezeichnen dabei gleiche Bauteile wie in den vorangegangenen, schematischen Figuren. In Fig. 8 ist die Rückstellfeder 13 nicht gezeigt, sondern eine Aufnahme 32, in der die Rückstellfeder 13 anzuordnen ist.

Wie Fig. 10 zeigt, ist der Bedienhebel 6 mit einem Schwenklager 33 am Hebelgehäuse 11 gelagert. Der Bedienhebel 6 ist dabei um eine Schwenkachse 47 schwenkbar. Beide Endlagen des Bedienhebels 6 werden durch am Gehäuse 11 ausgebildete Anschläge 39 und 40 begrenzt.

Wie Fig. 11 zeigt, sind am Bedienhebel 6 mehrere Rastvertiefungen 34 ausgebildet, in die eine am Hebelgehäuse 11 ausgebildete Raste 35 ragt. Dadurch werden die einzelnen Rastpositionen des Bedienhebels 6 festgelegt. In jeder möglichen Stellung des Bedienhebels 6 wirkt der Druckstab 15 auf die Sperrklinke 16, so dass unabhängig von der Schwenklage des Bedienhebels 6 ein unbeabsichtigtes Lösen der Auslöseeinrichtung 41 verhindert ist. Der Bedienhebel 6 dient zur Einstellung der Fahrgeschwindigkeit des Rasenmähers 1. Über die einzelnen Rastvertiefungen 34 werden die unterschiedlichen Fahrgeschwindigkeiten festgelegt. Dadurch wird kein zusätzlicher Fahrgeschwindigkeitshebel benötigt.

Beim Verschwenken des Bedienhebels 6 verschwenkt auch der Druckstab 15 gegenüber der Sperrklinke 16. Wie die Fig. 4 bis 7 zeigen, ändert sich die Lage des Druckstabs 15 gegenüber der Sperrklinke 16 beim Betätigen des Schiebers 9 und dem daran anschließenden Verschieben des Druckstabs 15 und Verschwenken und Verschieben der Sperrklinke 16. Aufgrund der Relativbewegung von Druckstab 15 und Sperrklinke 16 zueinander kann sich im Betrieb Verschleiß ergeben. In dem in Fig. 4 gezeigten unbetätigten Zustand des Bedienelements 7 wirken nur sehr geringe Kräfte an dem Berührpunkt zwischen Druckstab 15 und Sperrklinke 16, so dass hier kaum Verschleiß gegeben ist. Durch Verschwenken des Bedienelements 7 und Spannen der Spannfeder 20 wird die Sperrklinke 16 von dem Absatz 17 nach oben gegen den Druckstab 15 gedrückt. In dieser Stellung wirken im Berührpunkt von Sperrklinke 16 und Druckstab 15 vergleichweise große Kräfte. Um beim Verschwenken des Bedienhebels 6 in dieser Stellung möglichst geringen Verschleiß zu erreichen, ist vorgesehen, dass die Schwenkachse 47 des Bedienhebels 6 bei der in Fig. 5 gezeigten, vorgespannten und nicht ausgelösten Stellung des Systems im Berührpunkt von Druckstab 15 und Sperrklinke 16 liegt. Dadurch ergibt sich beim Verschwenken des Bedienhebels 6 eine minimale Relativbewegung von Druckstange 15 und Sperrklinke 16, so dass der Verschleiß minimiert werden kann.

Bei der in Fig. 7 gezeigten, ausgelösten Stellung des Systems sind die zwischen Druckstab 15 und Sperrklinke 16 wirkenden Kräfte gering. Der Druckstab 15 ist lediglich durch die Rückstellfeder 13 und eine eventuelle zusätzliche, in der Aufnahme 38 angeordnete Feder vorgespannt. Auch hier ist der Verschleiß dadurch gering.

Zur Minimierung des Verschleißes zwischen Druckstab 15 und Sperrklinke 16 wird die Schwenkachse 47 des Bedienhebels 6 demnach so angeordnet, dass sie in vorgespanntem Zustand des Systems etwa im Berührpunkt von Druckstab 15 und Sperrklinke 16 liegt.

## Patentansprüche

1. Handgeführtes Arbeitsgerät, insbesondere Rasenmäher oder dgl., mit einem Antriebsmotor (2), der ein Werkzeug des Arbeitsgeräts antreibt, mit einem Griff (4) zum Führen des Arbeitsgeräts, wobei an dem Griff (4) mindestens ein Bedienelement (7) schwenkbar angeordnet ist, wobei das Bedienelement (7) eine unbetätigte und eine betätigte Stellung besitzt, und mit einer Bremseinrichtung für das Werkzeug, die in betätigter Stellung einen weiteren Antrieb des Werkzeugs verhindert,
**dadurch gekennzeichnet, dass** das Bedienelement (7) über eine Spannfeder (20) auf die Bremseinrichtung wirkt, dass die Spannfeder (20) beim Verschwenken des Bedienelements (7) von der unbetätigten in die betätigte Stellung gespannt wird, und dass das Arbeitsgerät eine Auslöseeinrichtung (41) besitzt, die die Wirkverbindung zwischen der Spannfeder (20) und der Bremseinrichtung in unbetätigtem Zustand der Auslöseeinrichtung (41) sperrt und in betätigtem Zustand freigibt.

2. Arbeitsgerät nach Anspruch 1,
**dadurch gekennzeichnet, dass** die Auslöseeinrichtung (41) eine Bedieneinrichtung besitzt, die in Richtung auf ihre unbetätigte Stellung gefedert ist.

3. Arbeitsgerät nach Anspruch 1 oder 2,
**dadurch gekennzeichnet, dass** die Spannfeder (20) über ein Betätigungselement (18) auf die Bremseinrichtung wirkt.

4. Arbeitsgerät nach Anspruch 3,
**dadurch gekennzeichnet, dass** die Spannfeder (20) an einem Schwenklager (44) an dem Betätigungselement (18) gehalten ist, und dass das Bedienelement (7) um eine Schwenkachse (42) schwenkbar gelagert ist, wobei die durch das Schwenklager (44) und die Schwenkachse (42) gebildete gedachte Ebene (46) mit der Längsmittelachse (43) der Spannfeder (20) in betätigter Stellung des Bedienelements (7) einen Winkel von weniger als etwa 20° einschließt.

5. Arbeitsgerät nach einem der Ansprüche 1 bis 4,
**dadurch gekennzeichnet, dass** die Auslöseeinrichtung (41) eine Sperrklinke (16) umfasst, wobei die Sperrklinke (16) insbesondere an dem Betätigungselement (18) schwenkbar gelagert ist.

6. Arbeitsgerät nach Anspruch 5,
**dadurch gekennzeichnet, dass** die Sperrklinke (16) in gelöstem Zustand der Bremseinrichtung die Auslöseeinrichtung (41) in ihrer betätigten Stellung hält.

7. Arbeitsgerät nach Anspruch 5 oder 6,
**dadurch gekennzeichnet, dass** die Sperrklinke (16) in einem Gehäuse angeordnet ist, wobei die Sperrklinke (16) bei unbetätigter Auslöseeinrichtung (41) an dem Gehäuse eingerastet ist.

8. Arbeitsgerät nach Anspruch 7,
**dadurch gekennzeichnet, dass** die Sperrklinke (16) von der Spannfeder (20) gegen einen Absatz (17) des Gehäuses gezogen wird, wobei die Sperrklinke (16) und der Absatz (17) so ausgebildet sind, dass die Sperrklinke (16) bei einer Bewegung in Richtung auf die Spannfeder (20) in ihre gelöste Stellung verschwenkt wird.

9. Arbeitsgerät nach einem der Ansprüche 5 bis 8,
**dadurch gekennzeichnet, dass** die Auslöseeinrichtung (41) einen Schieber (12) umfasst, der in unbetätigtem Zustand der Auslöseeinrichtung (41) ein Verschenken der Sperrklinke (16) in ihre gelöste Stellung verhindert, wobei der Schieber (12) insbesondere über einen Druckstab (15) auf die Sperrklinke (16) wirkt, wobei der Schieber (12) insbesondere eine Aussparung (14) besitzt, in die der Druckstab (15) in betätigter Stellung der Auslöseeinrichtung (41) ragt.

10. Arbeitsgerät nach einem der Ansprüche 1 bis 9,
**dadurch gekennzeichnet, dass** die Bremseinrichtung eine Rückstellfeder (27) besitzt, die die Bremseinrichtung in die betätigte Stellung zieht, und dass die Spannfeder (20) der Kraft der Rückstellfeder (27) entgegenwirkt.

11. Arbeitsgerät nach einem der Ansprüche 1 bis 10,
**dadurch gekennzeichnet, dass** die Bremseinrichtung eine Messerbremse (23) und/oder eine Kupplung (37) umfasst.

12. Arbeitsgerät nach einem der Ansprüche 1 bis 11,
**dadurch gekennzeichnet, dass** das Arbeitsgerät einen verschwenkbaren Bedienhebel (6) zur Einstellung der Fahrgeschwindigkeit besitzt, wobei die Bedieneinrichtung für die Auslöseeinrichtung (41) insbesondere an dem Bedienhebel (6) für die Fahrgeschwindigkeit angeordnet ist, und wobei insbesondere eine Rasteinrichtung vorgesehen ist, die mehrere Stellungen für den Bedienhebel (6) festlegt.

13. Arbeitsgerät nach Anspruch 12,
**dadurch gekennzeichnet, dass** die Schwenkachse (47) des Bedienhebels (16) in mindestens einer Stellung etwa durch den Berührpunkt von zwei quer zueinander bewegten Bauteilen der Auslöseeinrichtung (41) verläuft.

14. Arbeitsgerät nach Anspruch 13,
**dadurch gekennzeichnet, dass** die Schwenkachse (47) des Bedienhebels (16) bei gespannter Spannfeder (20) und in unbetätigtem Zustand der Auslöseeinrichtung (41) etwa durch den Berührpunkt von zwei quer zueinander bewegten Bauteilen der Auslöseeinrichtung (41) verläuft.

15. Arbeitsgerät nach einem der Ansprüche 1 bis 14,
**dadurch gekennzeichnet, dass** das Arbeitsgerät mindestens ein Rad (3) besitzt, das im Betrieb auf dem Boden abrollt.
